# EUROPEAN PATENT SPECIFICATION

(11) **EP 2 874 152 B1**
(45) Date of publication and mention of the grant of the patent: **21.03.2018**
(21) Application number: 13796877.2
(22) Date of filing: 21.05.2013
(51) Int. Cl.: G21F 9/12, B01J 20/06, C01G 23/00, G21F 9/06, G21F 9/10, B01J 39/02, B01J 39/10, B01J 20/04, C02F 9/00, B01J 20/02, B01J 20/28, C02F 1/44, C02F 1/28, C02F 1/66, C02F 101/00, C02F 103/08

(54) **TREATMENT METHOD AND USE OF A TREATMENT DEVICE FOR WASTE WATER CONTAINING RADIOACTIVE STRONTIUM**
BEHANDLUNGSVERFAHREN UND NUTZUNG EINER BEHANDLUNGSVORRICHTUNG FÜR ABWASSER MIT RADIOAKTIVEM STRONTIUM
PROCÉDÉ DE TRAITEMENT ET L'UTILISATION D'UN DISPOSITIF DE TRAITEMENT POUR EAUX USÉES CONTENANT DU STRONTIUM RADIOACTIF

(30) Priority: 29.05.2012 JP 2012122214
(43) Date of publication of application: 20.05.2015
(73) Proprietor: Kurita Water Industries Ltd., Nakano-ku, Tokyo 164-0001 (JP); Otsuka Chemical Co., Ltd., Osaka-shi, Osaka 540-0021 (JP)
(72) Inventor: MORI, Koichi, Tokyo 164-0001 (JP); YAMADA, Satoshi, Tokyo 164-0001 (JP); ITOI, Nobuki, Tokushima-shi Tokushima 771-0193 (JP); MORI, Hiroyoshi, Tokushima-shi Tokushima 771-0193 (JP); GOTOU, Toshiki, Tokyo 101-8535 (JP)
(74) Representative: Hoffmann Eitle
(86) International application number: PCT/JP2013/064026
(87) International publication number: WO 2013/179939

(56) References cited:
- EP-A1- 0 956 159
- WO-A1-2011/039832
- JP-A- H04 219 103
- JP-A- S63 289 497
- JP-A- 2001 522 032
- JP-A- 2002 267 796
- JP-A- 2006 084 237
- JP-A- 2011 512 531
- JP-A- 2013 076 628
- JP-A- 2013 088 391
- US-A1- 2011 290 732
- US-B2- 6 517 788
- Davida. Hobbs ET AL: "Preparation and Use of Dried Monosodium Titanate", Preparation and Use of Dried Monosodium Titanate, 24 March 2004 (2004-03-24), pages 1-16, XP055319958, DOI: 10.2172/822303 Retrieved from the Internet: URL:http://sti.srs.gov/fulltext/tr2003546/ tr2003546.pdf [retrieved on 2016-11-16]

## Description

### Field of Invention

The present invention relates to a method and apparatus for efficiently removing radioactive strontium from wastewater containing radioactive strontium.

### Background of Invention

Radioactive strontium ⁹⁰Sr, as well as radioactive cesium, has a long half-life and is a fission product highly diffusible in water; hence, it is desired to improve a technique for efficiently removing radioactive strontium from water contaminated with radioactive strontium.

A method for removing radioactive strontium by adsorption using an adsorbent containing orthotitanic acid has been known as a method for treating wastewater containing radioactive strontium (Non Patent Literature 1). A method using sodium titanate in the form of granules as such an adsorbent has been proposed (Patent Literature 1).

US 2011/290732 relates to a method for decontamination of a liquid effluent including one or more radioactive chemical elements to be eliminated including the following steps:
a step of bringing into contact in a stirred fluidised bed, in a first zone of a reactor, of the said liquid effluent with solid particles able, by coprecipitation and/or adsorption and/or ion exchange, to capture and retain the said radioactive chemical element or elements, as a result of which a suspension of solid particles is obtained containing the said radioactive chemical element or elements;
a step of settling, of the said suspension, in a second zone of the same reactor, where this second zone is separate from the first abovementioned zone, as a result of which a solid phase is obtained including the solid particles containing the said radioactive chemical element or elements to be eliminated, and a liquid phase with a reduced or zero content of the said radioactive chemical element or elements to be eliminated; and a step of separation of the said solid phase and of the said liquid phase.

WO 2011/039832 describes of treating water such that excellent water quality is effectively obtained, thereby improving the sedimentation property, concentration performance, and filterability of sludge in an activated sludge liquid mixture in a biotreatment tank by adding an iron salt. When an iron salt such as ferrous salt, ferric salt, or polyferric sulfate is added to organic wastewater in biotreatment, the iron salt is added to and mixed with the organic wastewater and the water mixture is mixed with an activated sludge and biologically treated. By mixing the organic wastewater and the iron salt in advance at close to the optimum pH of ferric hydroxide, turbidity of the treated water caused by the generation of iron oxide and iron carbonate is prevented

WO 97/23290 (corresponding to EP 956 159) concerns a method of producing titanate ion exchangers applicable in columns and packed bed operations, comprising the steps of mixing a solid hydrous titanium oxide in an alcohol with a base. The mixture is boiled and stirred and water is added. The solid matter is settled and separated from the solution phase, washed and dryed. The obtained cake is crushed, and rinsed and dried to obtain a titanate product consisting of granules with a particle size of 0.1 to 2 mm and a sodium-to-titanium molar ratio of less than 0.7.

US 6,517,788 B2 discloses a method for absorption of strontium and transuranium elements on monosodium titanate.

### List of Literature

### Patent Literature

Patent Literature 1: Japanese Patent 4428541

### Non Patent Literature

Non Patent Literature 1: Masumitsu Kubota et al., Development of group separation method: Development of treating method of liquid waste containing 90Sr and 134Cs by inorganic ion exchange column), JAERI-M 82-144 (1982) Object and Summary of Invention

### Object of Invention

As described in Patent Literature 1, it is difficult to ensure sufficient crushing strength in the case of granulizing an alkali metal titanate only. Therefore, in the case of removing strontium by adsorption in such a manner that wastewater is fed through an adsorption column filled with granules of the alkali metal titanate, fine particles generated from surfaces of the crushed granules flow out of an outlet of the adsorption column and, as a result, it is difficult to stably ensure the DF (decontamination factor) value for radioactive strontium in treated water.

Supporting the alkali metal titanate on substrates having sufficient strength as filler increases radioactive waste by an amount equal to the amount of the substrates, which are inert. Furthermore, alkali metal titanate-supported granules need to be produced and therefore costs increase.

In the case of treating wastewater containing a high concentration of strontium, a large amount of the alkali metal titanate, which is an expensive functional material, has needed to be used. In the case where seawater in which calcium and magnesium, which are the same alkaline-earth metals, are co-present with strontium has been contaminated with radioactive strontium, a larger amount of the alkali metal titanate has needed to be used because the alkali metal titanate adsorbs calcium and magnesium together with strontium.

A method in which strontium in wastewater is precipitated in the form of a carbonate and is then removed by solid-liquid separation need not use any special functional material, is a method effective in roughly removing strontium present at high concentration, and has had a problem that strontium cannot be removed to a level not higher than the solubility of strontium.

The present invention has a first object to provide a treatment method and the use of a treatment apparatus for efficiently removing radioactive strontium from wastewater containing radioactive strontium.

The present invention further has a second object to provide a treatment method and the use of a treatment apparatus for efficiently removing radioactive strontium from wastewater containing an alkaline-earth metal in addition to radioactive strontium like high-concentration radioactive strontium-containing wastewater and seawater contaminated with radioactive strontium.

### Solution to Problem

The inventors have performed intensive investigations to solve the above problems and, as a result, have found that the radiation dose of treated water can be effectively reduced in such a manner that a powder of potassium dititanate is directly added to radioactive strontium-containing wastewater and is dispersed therein and therefore radioactive strontium is efficiently removed by adsorption.

Furthermore, the inventors have found that strontium and other alkaline-earth metals in wastewater are allowed to react with carbonate ions under alkaline conditions prior to or in parallel with the treatment thereof, precipitates are thereby produced, and these can be readily removed by solid-liquid separation.

The present invention has been accomplished on the basis of these findings and is as summarized below.

[1] A method for treating radioactive strontium-containing wastewater, comprising: a step of mixing wastewater containing radioactive strontium with a powdery alkali metal titanate or a scurry thereof in a stirrer-equipped reaction tank to sallow the powdery alkali metal titanate to adsorb radioactive strontium in the wastewater; and a step of subjecting the powdery alkali metal titanate on which radioactive strontium is adsorbed to sofid-liquid separation; wherein the powdery alkali metal titanate is potassium dititanate.
[2] The method for treating radioactive strontium-containing wastewater according to [1], wherein the powdery alkali metal titanate has an average particle size of 1 µm to 1,000 µm, and has a non-fibrous shape in which a plurality of bumps having a round tip extend in irregular directions.
[3] The method for treating radioactive strontium-containing wastewater according to [1] or [2],
   wherein the powdery alkali metal titanate is used in the form of slurry.
[4] The method for treating for radioactive strontium-containing wastewater according to any one of [1] to [3], wherein the method further comprises an alkali aggregation step for depositing strontium in the wastewater in such a manner that carbonate ions are added to the wastewater in an amount equivalent to 1.0 to 2.0 times the amount of strontium contained in the wastewater, and alkali is then further added to the wastewater such that the pH thereof is adjusted to 9.0 to 13.5; and wherein the powdery alkali metal titanate is added during the alkali aggregation step or after the alkali aggregation step.
[5] The method for treating radioactive strontium-containing wastewater according to any one of [1] to [3], wherein the wastewater contains an alkaline-earth metal other than strontium, wherein the method further comprises an alkali aggregation step for depositing strontium and the alkaline-earth metal other than strontium in the wastewater in the form of carbonates or hydroxides in such a manner that carbonate ions are added in an amount equivalent to 1.0 to 2.0 times the amount of all the alkaline-earth metals in the wastewater, and alkali is further added such that the pH thereof is adjusted to 9.0 to 13.5; and wherein the powdery alkali metal titanate is added during the alkali aggregation step or after the alkali aggregation step.
[6] The use of an apparatus for treating radioactive strontium containing waste water, the apparatus comprising: a stirrer-equipped reaction tank; means for introducing radioactive strontium-containing wastewater into the reaction tank; means for adding a powdery alkali metal titanate or a slurry thereof to the reaction tank, wherein the powdery alkali metal titanate is potassium dititanate; and solid-liquid separation means for subjecting a reaction solution coming from the reaction tank to solid-liquid separation, wherein the powdery alkali metal titanate is added to the radioactive strontium-containing wastewater in the reaction tank, radioactive strontium in the wastewater is adsorbed on the powdery alkali metal titanate, and the powdery alkali metal titanate having radioactive strontium adsorbed thereon is separated with the solid-liquid separation means.
[7] The use of an apparatus for treating radioactive strontium-containing wastewater according to [6], wherein the apparatus further comprises means for adding a carbonate to the reaction tank and means for adjusting the pH in the reaction tank.
[8] The use of an apparatus for treating radioactive strontium-containing wastewater according to [6], wherein the apparatus further comprises a first reaction tank in which a carbonate and alkali are added to the wastewater, the first reaction tank being located upstream of the stirrer-equipped reaction tank so that an outflow from the first reaction tank is introduced into the stirrer-equipped reaction tank.
[9] The use of an apparatus for treating radioactive strontium-containing wastewater according to any one of [6] to [8], wherein the solid-liquid separation means is a settling tank or an ultrafiltration membrane separator.

According to the present invention, the radiation dose of treated water can be effectively reduced in such a manner that a powder of an alkali metal titanate is directly added to radioactive strontium-containing wastewater and is dispersed therein and therefore radioactive strontium is efficiently removed by adsorption.

In the case where the concentration of radioactive strontium in wastewater is high or in the case where wastewater contains an alkaline-earth metal other than radioactive strontium like seawater is contaminated with radioactive strontium, strontium and the alkaline-earth metal in the wastewater are allowed to react with carbonate ions under alkaline conditions prior to or in parallel with treatment using a powder of an alkali metal titanate and are deposited and the concentrations in the wastewater are thereby reduced. Thereafter or in conjunction therewith, adsorption treatment is performed using a powdery alkali metal titanate, whereby efficient treatment can be performed using a small amount of the powdery alkali metal titanate even in the treatment of high-concentration radioactive strontium-containing wastewater, radioactive strontium-contaminated seawater containing other alkaline-earth metals, or the like.

### Brief Description of Drawings

Fig. 1 is a flow diagram showing an embodiment of a treatment apparatus for radioactive strontium-containing wastewater as used in the present invention.
Fig. 2 is a flow diagram showing another embodiment of a treatment apparatus for radioactive strontium-containing wastewater as used in the present invention.
Fig. 3 is a flow diagram showing another embodiment of a treatment apparatus for radioactive strontium-containing wastewater as used in the present invention.
Fig. 4 is a flow diagram showing another embodiment of a treatment apparatus for radioactive strontium-containing wastewater as used in the present invention.
Fig. 5 is a SEM photograph of potassium dititanate.

### Description of Embodiments

Embodiments of the present invention are described below in detail. The embodiments described below are intended to facilitate the understanding of the present invention and are not intended to limit the present invention. The present invention can be carried out in such a manner that elements disclosed in the embodiments below are variously modified without departing from the scope of the present invention, which is defined in the appended claim.

In the present invention, a powdery alkali metal titanate, which is potassium dititanate, is added to a radioactive strontium-containing wastewater (hereinafter referred to as "raw water" in some cases) and is mixed in a reaction tank by stirring such that the wastewater and the powdery alkali metal titanate are subjected to solid-liquid contacting, whereby radioactive strontium in the wastewater is adsorbed on the powdery alkali metal titanate and is removed. Thereafter, the powdery alkali metal titanate having radioactive strontium adsorbed thereon is subjected to solid-liquid separation, whereby treated water from which radioactive strontium has been highly removed can be obtained.

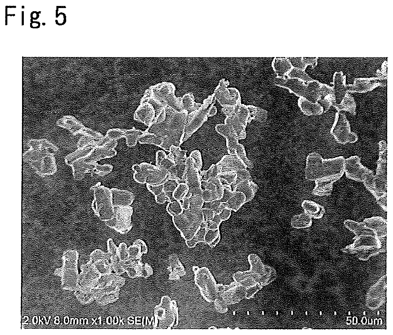

The alkali metal of the alkali metal titanate used in the present invention is potassium in terms of the ability to adsorb strontium and from the viewpoint of adsorption rate and adsorption capacity. Furthermore, in the case of synthesizing potassium dititanate by a common fusion process, a product with a fibrous crystal shape is obtained. However, a product having such a shape that a plurality of bumps with a round tip extend in irregular directions is obtained in such a manner that after a titanium source and a potassium source are mixed while being mechanochemically crushed, the crushed mixture is calcined at 650°C to 1,000°C as disclosed in WO 2008/123046 (Fig. 5). Potassium titanate with such a shape does not damage any filtration membrane as compared to a fibrous product and is preferred in terms of filtration properties.

When potassium dititanate is contacted with strontium ions in the raw water, an ion exchange reaction given by Expression (1) below proceeds depending on the difference in stability between a potassium salt and a strontium salt. This removes strontium from the raw water.

K₂O·2TiO₂ + Sir²⁺ → SrO·2TiO₂ + 2K⁺ (1)

The powdery alkali metal titanate, which is added to wastewater, preferably has an average particle size of 1 µm to 1,000 µm, particularly preferably 1 µm to 100 µm, and especially preferably 5 µm to 50 µm. When the average particle size of the powdery alkali metal titanate is excessively small, the handleability thereof is poor. When the average particle size is excessively large, the specific surface area is small and the ability to adsorb radioactive strontium tends to decrease. The average particle size can be measured with, for example, a laser diffraction particle size distribution analyzer.

The powdery alkali metal titanate, which is used in the present invention, is potassium dititanate represented by the chemical formula K₂Ti₂O₅ because it has a large cation exchange capacity, is thermally stable, and is excellent in resistance to chemicals such as acids and alkalis.

The powdery alkali metal titanate may be dry-supplied to the raw water in the form of powder using a quantitative powder feeder. The powdery alkali metal titanate is stored in a tank in the form of slurry in advance and may be wet-supplied to the raw water using a pump. In the case of slurry, the following method is preferably used: a method in which slurry is supplied while being circulated in such a manner that a stirrer is used or a circulation line is connected to a discharge line of a supply pump such that sedimentation does not occur in a storage tank. As a solvent for slurry, water or an aqueous solution containing alkali metal ions can be used and the alkali metal ion-containing aqueous solution is preferably used because the powdery alkali metal titanate can be prevented from being transformed into an H-type having the low ability to adsorb strontium. In the case of supplying the powdery alkali metal titanate in the form of slurry, the concentration of the powdery alkali metal titanate in the slurry is preferably about 1% to 50% by weight in terms of handling.

The powdery alkali metal titanate may be added in the form of granular aggregates as described in Patent Literature 1. In this case, the aggregates preferably have an average particle size of about 10 µm to 1,000 µm and more preferably about 10 µm to 250 µm.

The amount of the powdery alkali metal titanate added to the raw water varies depending on properties of the raw water and whether treatment using a carbonate below is performed and is preferably 50 mg to 5,000 mg per liter of the raw water. When the amount of the added powdery alkali metal titanate is excessively small, radioactive strontium in the raw water cannot be sufficiently removed. When the amount thereof is excessively large, a higher removal effect cannot be expected and the amount of the powdery alkali metal titanate used is unnecessarily large, which is uneconomical.

In usual, the adsorption treatment of radioactive strontium by means of the powdery alkali metal titanate is preferably performed under conditions at a pH of about 7 to 13. Thus, when the pH of the raw water is outside the above range, the pH thereof is appropriately adjusted by adding acid or alkali.

After the powdery alkali metal titanate is added to the raw water, mixing is sufficiently performed in a stirrer-equipped reaction tank by stirring for the purpose of ensuring the necessary reaction time. In usual, the reaction time is preferably about 1 minute to 120 minutes and therefore the stirrer-equipped reaction tank is preferably designed such that such a residence time is achieved.

After the powdery alkali metal titanate is added to the raw water in the stirrer-equipped reaction tank and is allowed to sufficiently react therewith, a reaction solution is subjected to solid-liquid separation. In this operation, coagulation treatment may be performed by adding a coagulant as required. An anionic polymer or the like can be used as the coagulant as described below and the amount of the added coagulant is usually about 0.5 mg/L to 5 mg/L.

Solid-liquid separation can be performed using a settling tank, an MF (microfiltration) membrane separator, or the like.

Treated water in which the concentration of radioactive strontium is reduced to 1 mg/L or less can be usually obtained by such treatment.

In the present invention, when the raw water contains radioactive strontium and a large amount, for example, 3 mg/L or more, of alkaline-earth metals (including strontium, which is a stable isotope), an attempt to remove radioactive strontium by adsorption in such a manner that the powdery alkali metal titanate is directly added to the raw water is economically disadvantageous because the added powdery alkali metal titanate is used for the alkaline-earth metals rather than radioactive strontium and therefore a large amount of the powdery alkali metal titanate is necessary.

Thus, in the case of treating the raw water, it is preferred that radioactive strontium and the alkaline-earth metals in the raw water are deposited or precipitated by adding a carbonate to the raw water under alkaline conditions (this operation is hereinafter referred to as "alkali aggregation" in some cases) and the adsorption treatment of radioactive strontium is performed by adding the powdery alkali metal titanate after or in parallel with this treatment.

According to alkali aggregation, ions of the alkaline-earth metals, such as calcium, strontium, and magnesium, dissolved in the raw water are fixed in the form of precipitates in accordance with reactions given by Expressions (2) to (4) below.

Ca²⁺ + CO3²⁻ →CaCO₃ ↓ (2)

Sr²⁺ + CO₃²⁻ → SrCO₃ ↓ (3)

Mg²⁺ + 2OH⁻ → Mg(OH)₂ ↓ (4)

In the case of performing alkali aggregation, an alkali metal carbonate such as sodium carbonate (Na₂CO₃) or potassium carbonate (K₂CO₃) is preferably used as the carbonate added to the raw water. These may be used alone or in combination. Alternatively, wastewater containing these carbonates can be used.

When the amount of the added carbonate is excessively small, Sr and other alkaline-earth metal ions in the raw water cannot be sufficiently removed. When the amount of the added carbonate is excessively large, any removal effect appropriate to the amount of the added carbonate is obtained. Therefore, the amount of the added carbonate is appropriately determined depending on the concentrations of Sr and the other alkaline-earth metal ions in the raw water so as to be consistent with the reaction equivalent. If the concentrations of Sr and the other alkaline-earth metal in the raw water are determined from above Expressions (2) to (4), then the necessary amount of the added carbonate can be calculated. However, the carbonate is preferably added in an amount equivalent to 1.0 to 2.0 times the theoretically necessary amount because a portion of the carbonate does not contribute to reaction.

Ca and Sr deposit under alkaline conditions at a pH of 9 to 13.5 in the form of CaCO₃ and SrCO₃, respectively, and therefore the raw water is adjusted to a pH of 9 to 13.5 by adding alkali such as sodium hydroxide (NaOH) or potassium hydroxide (KOH) as a pH adjustor. In particular, when the raw water contains Mg²⁺, the raw water is preferably adjusted to a pH of 12 to 13.5 because Mg²⁺ deposits in the form of Mg(OH)₂ at a pH of 12 or more. Incidentally, alkaline wastewater may be used as alkali used for pH adjustment.

Performing such alkali aggregation enables radioactive strontium and the alkaline-earth metal ions co-present therewith to be deposited in the form of carbonates and a hydroxide (in the case of magnesium) to reduce the concentration in the raw water.

In alkali aggregation, in order to obtain deposits by allowing Sr and the other alkaline-earth metal ions in the raw water to sufficiently react with the carbonate, the stirrer-equipped reaction tank is preferably designed such that a residence time (reaction time) of about 1 minute to 30 minutes is achieved.

In the case of performing alkali aggregation, a reaction solution may be subjected to aggregation treatment using a polymeric coagulant such as an anionic polymeric coagulant (anionic polymer).

That is, strontium carbonate and calcium carbonate form good aggregated flocs with excellent settleability and magnesium hydroxide, however, forms bulky flocs with poor settleability. Magnesium hydroxide has a slightly positive surface, therefore is formed into coarse flocs by adding an anionic polymer, and can be improved in settleability.

Examples of the anionic polymer include, but are not particularly limited to, partial hydrolysates of polyacrylamides; copolymers of polyacrylamides and sodium acrylate; copolymers of polyacrylamides and sodium vinylsulfonate; and ternary copolymers of polyacrylamides, sodium acrylate, and sodium 2-acrylamide-2-methylpropanesulfonate. These can be used alone or in combination.

When the amount of the added anionic polymer is excessively small, any sufficient aggregation effect is not obtained. When the amount of the added anionic polymer is excessively large, an aggregation failure may possibly be caused. Therefore, the amount of the added anionic polymer is preferably about 0.5 mg/L to 5 mg/L.

In the case of performing alkali aggregation, after solid-liquid separation is performed subsequently thereto, the powdery alkali metal titanate may be added. It is advantageous that after alkali aggregation is performed, the powdery alkali metal titanate is added without performing solid-liquid separation and solid-liquid separation is then performed, because the settling tank and MF membrane separator for solid-liquid separation can be integrated into one.

In the case of performing alkali aggregation, not only a mode that the powdery alkali metal titanate is added after alkali aggregation but also alkali aggregation and adsorption treatment using the powdery alkali metal titanate may be performed at the same time by adding the powdery alkali metal titanate together with a carbonate and alkali for pH adjustment. That is, radioactive strontium and the alkaline-earth metal ions react preferentially with the carbonate and therefore an object can be achieved even if the carbonate and the powdery alkali metal titanate are added at the same time.

It is preferred that after the concentrations of radioactive strontium and the alkaline-earth metal ions in the raw water are reduced in such a manner that the carbonate is added to the raw water and is subjected to reaction for a predetermined time under alkaline conditions, adsorption treatment is performed by adding the powdery alkali metal titanate, because the concentrations of radioactive strontium and the alkaline-earth metal ions can be sufficiently reduced to a level not higher than the solubility of a deposited precipitate. The pH of a treatment solution for alkali aggregation becomes a pH suitable for adsorption by the alkali metal titanate and adsorption treatment can be efficiently performed.

After the carbonate is added to the raw water, the alkali metal titanate may be added together with the alkali for pH adjustment during alkali aggregation.

The following apparatus is described below with reference to drawings: a treatment apparatus for radioactive strontium-containing wastewater, the treatment apparatus being used to carry out a treatment method for radioactive strontium-containing wastewater according to the present invention in combination with alkali aggregation.

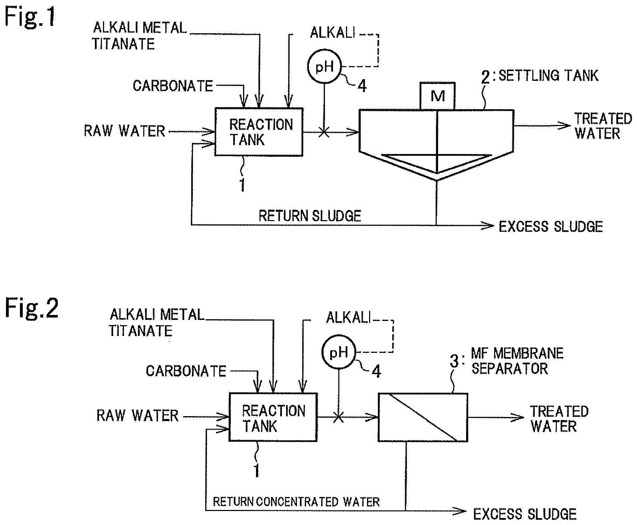

Figs. 1 to 4 each show an example of an embodiment of the treatment apparatus as used in the present invention. for radioactive strontium-containing wastewater. Reference numerals 1, 1A, and 1B each represent a stirrer-equipped reaction tank, a reference numeral 2 represents a settling tank, a reference numeral 3 represents an MF membrane separator, and a reference numeral 4 represents a pH meter.

### 1) Single reaction tank + settling tank

The treatment apparatus, shown in Fig. 1, for radioactive strontium-containing wastewater includes the single stirrer-equipped reaction tank 1 and the settling tank 2. The raw water is introduced into the reaction tank 1; the alkali metal titanate (powder or slurry), the carbonate, and the alkali for pH adjustment are added to the reaction tank 1 in synchronization with the pH meter 4 and are subjected to reaction for a predetermined time; and a reaction solution coming from the reaction tank 1 is subjected to solid-liquid separation in the settling tank 2. Separated water in the settling tank 2 is discharged outside in the form of treated water, a portion of separated sludge is returned to the reaction tank 1 as return sludge, and the remainder is discharged outside in the form of excess sludge.

The effect of coarsening deposits using the return sludge as a nucleus to enhance the settleability is achieved by performing sludge returning. However, performing sludge returning leads to the scale-up of a treatment system; hence, sludge returning need not be performed.

### 2) Single reaction tank + MF membrane separator

The treatment apparatus, shown in Fig. 2, for radioactive strontium-containing wastewater includes the single stirrer-equipped reaction tank 1 and the MF membrane separator 3. As is the case in Fig. 1, the raw water is introduced into the reaction tank 1; the alkali metal titanate (powder or slurry), the carbonate, and the alkali for pH adjustment are added to the reaction tank 1 in synchronization with the pH meter 4 and are subjected to reaction for a predetermined time; and a reaction solution coming from the reaction tank 1 is subjected to solid-liquid separation in the MF membrane separator 3. Permeable water in the MF membrane separator 3 is discharged outside in the form of treated water, a portion of concentrated water is returned to the reaction tank 1 in the form of returned concentrated water, and the remainder is discharged outside in the form of excess sludge.

In a mode shown in Fig. 2, the effect of coarsening deposits using solid matter in the concentrated water as a nucleus to enhance the solid-liquid separability is achieved by returning the concentrated water. However, returning the concentrated water leads to the scale-up of a treatment system; hence, the concentrated water need not be returned.

### 3) Two reaction tanks + settling tank

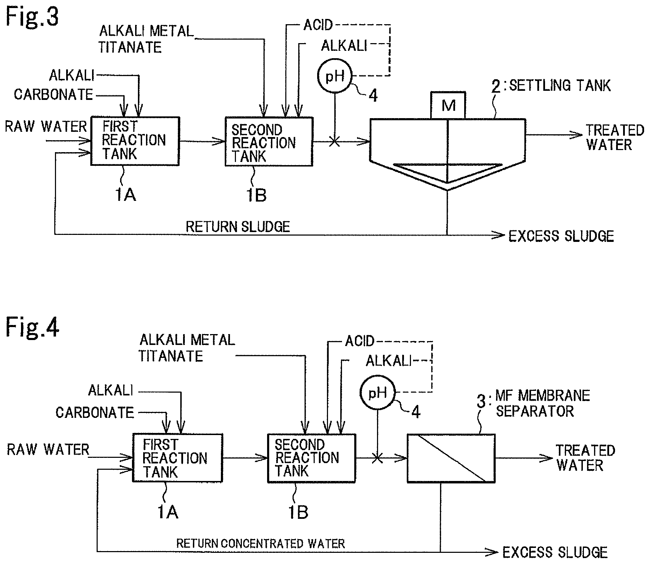

The treatment apparatus, shown in Fig. 3, for radioactive strontium-containing wastewater includes the two stirrer-equipped reaction tanks 1A and 1B and the settling tank 2. The raw water is introduced into the first reaction tank 1A, the carbonate and the alkali for pH adjustment are added to the first reaction tank 1A and are subjected to reaction for a predetermined time, a reaction solution in the first reaction tank 1A is supplied to the second reaction tank 1B, and the alkali metal titanate (powder or slurry) and acid or alkali for pH adjustment are added to the second reaction tank 1B in synchronization with the pH meter 4 and are subjected to reaction for a predetermined time. A reaction solution coming from the second reaction tank 1B is subjected to solid-liquid separation in the settling tank 2. Separated water in the settling tank 2 is discharged outside in the form of treated water, a portion of separated sludge is returned to the first reaction tank 1A as return sludge, and the remainder is discharged outside in the form of excess sludge.

In a mode shown in Fig. 3, the effect of coarsening deposits using the return sludge as a nucleus to enhance the settleability is achieved by performing sludge returning. However, performing sludge returning leads to the scale-up of a treatment system; hence, sludge returning need not be performed.

### 4) Two reaction tanks + MF membrane separator

The treatment apparatus, shown in Fig. 4, for radioactive strontium-containing wastewater includes the two stirrer-equipped reaction tanks 1A and 1B and the MF membrane separator 3. The raw water is introduced into the first reaction tank 1A, the carbonate and the alkali for pH adjustment are added to the first reaction tank 1A and are subjected to reaction for a predetermined time, a reaction solution in the first reaction tank 1A is supplied to the second reaction tank 1B, and the alkali metal titanate (powder or slurry) and acid or alkali for pH adjustment are added to the second reaction tank 1B in synchronization with the pH meter 4 and are subjected to reaction for a predetermined time. A reaction solution coming from the second reaction tank 1B is subjected to solid-liquid separation in the MF membrane separator 3. Permeable water in the MF membrane separator 3 is discharged outside in the form of treated water, a portion of concentrated water is return to the first reaction tank 1A as return sludge, and the remainder is discharged outside in the form of excess sludge.

In a mode shown in Fig. 4, the effect of coarsening deposits using solid matter in the concentrated water as a nucleus to enhance the solid-liquid separability is achieved by returning the concentrated water. However, returning the concentrated water leads to the scale-up of a treatment system; hence, the concentrated water need not be returned.

### EXAMPLES

The present invention is further described below in detail with reference to examples and a comparative example.

In the examples and the comparative example below, simulated seawater with properties shown in Table 1 below was used as raw water.

**[Table 1]**

| Appearance | pH [-] | Conductivity [mS/m] | Ca [mg/L] | Mg [mg/L] | Sr [mg/L] |
|---|---|---|---|---|---|
| Colorless and transparent | 8.2 | 4,880 | 407 | 1407 | 6.8 |

### [Synthetic Example 1: synthesis of potassium dititanate]

In a Henschel mixer, 418.94 g of titanium oxide and 377.05 g of potassium carbonate were mixed. An obtained mixture was mixed for 0.5 hours in a vibration mill while being crushed.

Fifty grams of an obtained crashed mixture was filled in a crucible and was calcined at 780°C for 4 hours in an electric furnace. A calcined product was crushed in a hammer mill, whereby potassium dititanate having such a shape that a plurality of bumps extended in irregular directions was obtained. The average particle size thereof was 20 µm.

### [Comparative Example 1]

Na₂CO₃ was added to raw water so as to become 1,300 mg/L at its concentration. The pH thereof was adjusted to 12.5 using NaOH. In this operation, the concentration of deposited sludge was about 2% by weight. The raw water was then subjected to solid-liquid separation using an MF membrane with a pore size of 0.2 µm, whereby treated water (water permeated through the MF membrane) was obtained. The quality of the treated water was as shown in Table 2.

### [Examples 1 to 6]

In Comparative Example 1, powdery potassium dititanate obtained in Synthetic Example 1 was added together with Na₂CO₃ and NaOH such that the amount of added potassium titanate was 200 mg/L or 500 mg/L, followed by reaction for a time shown in Table 2 in a stirrer-equipped reaction tank. Thereafter, a reaction solution was subjected to MF membrane separation treatment as is the case in Comparative Example 1. The quality of obtained treated water was as shown in Table 2.

### [Examples 7 and 8]

In Comparative Example 5 and 6, slurry (10% by weight powdery potassium dititanate) prepared by suspending powdery potassium dititanate obtained in Synthetic Example 1 in a 0.1 mol/L KCl solution was added such that the amount of added potassium titanate was 500 mg/L, followed by reaction for a time shown in Table 2 in a stirrer-equipped reaction tank. Thereafter, a reaction solution was subjected to MF membrane separation treatment as is the case in Comparative Examples 5 and 6. The quality of obtained treated water was as shown in Table 2.

**[Table 2]**

| | Amount of added potassium titanate | Reaction time | Treated water | | |
|---|---|---|---|---|---|
| | | | Sr | Ca | Mg |
| | mg/L | (minute) | mg/L | mg/L | mg/L |
| Comparative Example 1 | 0 | - | 1.33 | 0.71 | <0.1 |
| Example 1 | 200 | 10 | 0.754 | - | - |
| Example 2 | 200 | 30 | 0.489 | - | - |
| Example 3 | 200 | 60 | 0.435 | 0.67 | <0.1 |
| Example 4 | 200 | 120 | 0.38 | 0.76 | 0.12 |
| Example 5 | 500 | 10 | 0.396 | - | - |
| Example 6 | 500 | 120 | 0.081 | 0.77 | <0.1 |
| Example 7 | 500 | 10 | 0.381 | - | - |
| Example 8 | 500 | 120 | 0.078 | 0.69 | <0.1 |

Table 2 shows clearly that, according to the present invention, the radiation dose of treated water can be effectively reduced in such a manner that radioactive strontium is efficiently removed even from high-concentration radioactive strontium-containing wastewater in which other alkaline-earth metal ions are co-present.

The present invention has been described in detail using specific embodiments. It is apparent to those skilled in the art that various modifications can be made without departing from the scope of the present invention, which is defined in the appended claims. The application is based on Japanese Patent Application 2012-122214 filed on May 29, 2012.

### Reference Signs List

- 1, 1A, 1B: Reaction tank
- 2: Settling tank
- 3: MF membrane separator
- 4: pH meter

## Claims

1. A method for treating radioactive strontium-containing wastewater, comprising:
a step of mixing wastewater containing radioactive strontium with a powdery alkali metal titanate or a slurry thereof in a stirrer-equipped reaction tank to allow the powdery alkali metal titanate to adsorb radioactive strontium in the wastewater; and
a step of subjecting the powdery alkali metal titanate on which radioactive strontium is adsorbed to solid-liquid separation,
wherein the powdery alkali metal titanate is potassium dititanate.

2. The method for treating radioactive strontium-containing wastewater according to Claim 1, wherein the powdery alkali metal titanate has an average particle size of 1 µm to 1,000 µm, and has a non-fibrous shape in which a plurality of bumps having a round tip extend in irregular directions.

3. The method for treating radioactive strontium-containing wastewater according to Claim 1 or 2,
wherein the powdery alkali metal titanate is used in the form of slurry.

4. The method for treating for radioactive strontium-containing wastewater according to any one of Claims 1 to 3
wherein the method further comprises an alkali aggregation step for depositing strontium in the wastewater in such a manner that carbonate ions are added to the wastewater in an amount equivalent to 1.0 to 2.0 times the amount of strontium contained in the wastewater, and alkali is then further added to the wastewater such that the pH thereof is adjusted to 9.0 to 13.5; and
wherein the powdery alkali metal titanate is added during the alkali aggregation step or after the alkali aggregation step.

5. The method for treating radioactive strontium-containing wastewater according to any one of Claims 1 to 4,
wherein the wastewater contains an alkaline-earth metal other than strontium,
wherein the method further comprises an alkali aggregation step for depositing strontium and the alkaline-earth metal other than strontium in the wastewater in the form of carbonates or hydroxides in such a manner that carbonate ions are added in an amount equivalent to 1.0 to 2.0 times the amount of all the alkaline-earth metals in the wastewater, and alkali is further added such that the pH thereof is adjusted to 9.0 to 13.5; and
wherein the powdery alkali metal titanate is added during the alkali aggregation step or after the alkali aggregation step.

6. Use of an apparatus for treating radioactive strontium containing waste water, the apparatus comprising:
a stirrer-equipped reaction tank;
means for introducing radioactive strontium-containing wastewater into the reaction tank;
means for adding a powdery alkali metal titanate or a slurry thereof to the reaction tank, the powdery alkali metal titanate being potassium dititanate; and
solid-liquid separation means for subjecting a reaction solution coming from the reaction tank to solid-liquid separation,
wherein the powdery alkali metal titanate is added to the radioactive strontium-containing wastewater in the reaction tank, radioactive strontium in the wastewater is adsorbed on the powdery alkali metal titanate, and the powdery alkali metal titanate having radioactive strontium adsorbed thereon is separated with the solid-liquid separation means.

7. The use of an apparatus for treating radioactive strontium-containing wastewater according to Claim 6,
wherein the apparatus further comprises means for adding a carbonate to the reaction tank and means for adjusting the pH in the reaction tank.

8. The use of an apparatus for treating radioactive strontium-containing wastewater according to Claim 6,
wherein the apparatus further comprises a first reaction tank in which a carbonate and alkali are added to the wastewater, the first reaction tank being located upstream of the stirrer-equipped reaction tank so that an outflow from the first reaction tank is introduced into the stirrer-equipped reaction tank.

9. The use of an apparatus for treating radioactive strontium-containing wastewater according to any one of Claims 6 to 8, wherein the solid-liquid separation means is a settling tank or an ultrafiltration membrane separator.

## Patentansprüche

1. Verfahren zur Behandlung von radioaktivem Strontium-haltigem Abwasser, umfassend:
einen Schritt, in dem Abwasser, das radioaktives Strontium enthält, mit einem pulverförmigen Alkalimetalltitanat oder einer Aufschlämmung davon in einem mit Rührer ausgestatteten Reaktionsbehälter gemischt wird, um es dem pulverförmigen Alkalimetalltitanat zu ermöglichen, radioaktives Strontium in dem Abwasser zu adsorbieren; und
einen Schritt, in dem das pulverförmige Alkalimetalltitanat, an das radioaktives Strontium adsorbiert ist, einer Fest-Flüssig-Trennung unterzogen wird,
wobei das pulverförmige Alkalimetalltitanat Kaliumdititanat ist.

2. Verfahren zur Behandlung von radioaktivem Strontium-haltigem Abwasser gemäß Anspruch 1,
wobei das pulverförmige Alkalimetalltitanat eine mittlere Teilchengröße von 1 µm bis 1,000 µm aufweist, und eine nicht-faserige Form aufweist, in der sich mehrere Erhebungen mit einer runden Spitze in unregelmäßige Richtungen erstrecken.

3. Verfahren zur Behandlung von radioaktivem Strontium-haltigem Abwasser gemäß Anspruch 1 oder 2,
wobei das pulverförmige Alkalimetalltitanat in der Form einer Aufschlämmung verwendet wird.

4. Verfahren zur Behandlung von radioaktivem Strontium-haltigem Abwasser gemäß mindestens einem der Ansprüche 1 bis 3,
wobei das Verfahren ferner einen Alkaliaggregationsschritt umfasst, in dem Strontium in solch einer Weise in dem Abwasser abgeschieden wird, dass Carbonationen in einer Menge, die der 1,0 bis 2,0-fachen Menge an Strontium, das in dem Abwasser enthalten ist, entspricht, zu dem Abwasser hinzugefügt werden, und dann ferner Alkali zu dem Abwasser hinzugefügt wird, sodass der pH-Wert davon auf 9,0 bis 13,5 eingestellt wird; und
wobei das pulverförmige Alkalimetalltitanat während des Alkaliaggregationsschritts oder nach dem Alkaliaggregationsschritt hinzugefügt wird.

5. Verfahren zur Behandlung von radioaktivem Strontium-haltigem Abwasser gemäß mindestens einem der Ansprüche 1 bis 4,
wobei das Abwasser ein anderes Erdalkalimetall als Strontium enthält,
wobei das Verfahren ferner einen Alkaliaggregationsschritt umfasst, in dem Strontium und das andere Erdalkalimetall als Strontium in Form von Carbonaten oder Hydroxiden in solch einer Weise in dem Abwasser abgeschieden werden, dass Carbonationen in einer Menge, die der 1,0 bis 2,0-fachen Menge von allen Erdalkalimetallen in dem Abwasser entspricht, hinzugefügt werden, und dann ferner Alkali hinzugefügt wird, sodass der pH-Wert davon auf 9,0 bis 13,5 eingestellt wird; und
wobei das pulverförmige Alkalimetalltitanat während des Alkaliaggregationsschritts oder nach dem Alkaliaggregationsschritt hinzugefügt wird.

6. Verwendung einer Vorrichtung zur Behandlung von radioaktivem Strontium-haltigem Abwasser, wobei die Vorrichtung umfasst:
einen mit Rührer ausgestatteten Reaktionsbehälter;
Mittel, um radioaktives Strontium-haltiges Abwasser in den Reaktionsbehälter einzuleiten;
Mittel, um ein pulverförmiges Alkalimetalltitanat oder eine Aufschlämmung davon in den Reaktionsbehälter zu geben, wobei das pulverförmige Alkalimetalltitanat Kaliumdititanat ist; und
Mittel zur Fest-Flüssig-Trennung, um eine Reaktionslösung, die aus dem Reaktionsbehälter kommt, einer Fest-Flüssig-Trennung zu unterziehen,
wobei das pulverförmige Alkalimetalltitanat zu dem radioaktiven Strontium-haltigen Abwasser in dem Reaktionsbehälter gegeben wird, radioaktives Strontium in dem Abwasser an das pulverförmige Alkalimetalltitanat adsorbiert wird, und das pulverförmige Alkalimetalltitanat, an das radioaktives Strontium adsorbiert ist, mit dem Mittel zur Fest-Flüssig-Trennung abgetrennt wird.

7. Verwendung einer Vorrichtung zur Behandlung von radioaktivem Strontium-haltigem Abwasser gemäß Anspruch 6, wobei die Vorrichtung ferner Mittel, um ein Carbonat in den Reaktionsbehälter zu geben, und Mittel, um den pH-Wert in dem Reaktionsbehälter einzustellen, umfasst.

8. Verwendung einer Vorrichtung zur Behandlung von radioaktivem Strontium-haltigem Abwasser gemäß Anspruch 6, wobei die Vorrichtung ferner einen ersten Reaktionsbehälter, in dem ein Carbonat und Alkali zu dem Abwasser hinzugefügt werden, umfasst, wobei sich der erste Reaktionsbehälter stromaufwärts von dem mit Rührer ausgestatteten Reaktionsbehälter befindet, sodass ein Abfluss aus dem ersten Reaktionsbehälter in den mit Rührer ausgestatteten Reaktionsbehälter eingeleitet wird.

9. Verwendung einer Vorrichtung zur Behandlung von radioaktivem Strontium-haltigem Abwasser gemäß mindestens einem der Ansprüche 6 bis 8, wobei das Mittel zur Fest-Flüssig-Trennung ein Absetzbehälter oder ein Ultrafiltrationsmembranabscheider ist.

## Revendications

1. Procédé de traitement d'eaux usées contenant du strontium radioactif, comprenant:
une étape de mélange d'eaux usées contenant du strontium radioactif avec un titanate de métal alcalin pulvérulent ou une suspension de celui-ci dans une cuve réactionnelle équipée d'un agitateur afin de permettre au titanate de métal alcalin pulvérulent d'adsorber le strontium radioactif dans les eaux usées ; et
une étape de soumission du titanate de métal alcalin pulvérulent sur lequel le strontium radioactif est adsorbé à une séparation solide-liquide,
dans lequel le titanate de métal alcalin pulvérulent est le dititanate de potassium.

2. Procédé de traitement d'eaux usées contenant du strontium radioactif selon la revendication 1, dans lequel le titanate de métal alcalin pulvérulent présente une taille particulaire moyenne de 1 µm à 1000 µm, et a une forme non fibreuse dans laquelle une pluralité de bosses ayant une extrémité arrondie se prolongent dans des directions irrégulières.

3. Procédé de traitement d'eaux usées contenant du strontium radioactif selon la revendication 1 ou 2,
dans lequel le titanate de métal alcalin pulvérulent est utilisé sous la forme d'une suspension.

4. Procédé de traitement d'eaux usées contenant du strontium radioactif selon l'une quelconque des revendications 1 à 3,
dans lequel le procédé comprend en outre une étape d'agrégation alcaline pour déposer le strontium dans les eaux usées d'une manière telle que des ions carbonate sont ajoutés aux eaux usées en une quantité équivalant à 1,0 à 2,0 fois la quantité de strontium contenue dans les eaux usées, et un alcalin est ensuite en outre ajouté aux eaux usées de façon à ce que le pH soit ajusté entre 9,0 et 13,5 ; et
dans lequel le titanate de métal alcalin pulvérulent est ajouté pendant l'étape d'agrégation alcaline ou après l'étape d'agrégation alcaline.

5. Procédé de traitement d'eaux usées contenant du strontium radioactif selon l'une quelconque des revendications 1 à 4,
dans lequel les eaux usées contiennent un métal alcalino-terreux autre que le strontium,
dans lequel le procédé comprend en outre une étape d'agrégation alcaline pour déposer le strontium et le métal alcalino-terreux autre que le strontium dans les eaux usées sous forme de carbonates ou d'hydroxydes d'une manière telle que des ions carbonate sont ajoutés en une quantité équivalant à 1,0 à 2,0 fois la quantité de tous les métaux alcalino-terreux dans les eaux usées, et un alcalin est en outre ajouté de façon à ce que le pH soit ajusté entre 9,0 et 13,5 ; et
dans lequel le titanate de métal alcalin pulvérulent est ajouté pendant l'étape d'agrégation alcaline ou après l'étape d'agrégation alcaline.

6. Utilisation d'un appareil de traitement d'eaux usées contenant du strontium radioactif, l'appareil comprenant :
une cuve réactionnelle équipée d'un agitateur ;
un moyen pour introduire des eaux usées contenant du strontium radioactif dans la cuve réactionnelle ;
un moyen pour ajouter un titanate de métal alcalin pulvérulent ou une suspension de celui-ci à la cuve réactionnelle, le titanate de métal alcalin pulvérulent étant le dititanate de potassium ; et
un moyen de séparation solide-liquide pour soumettre une solution réactionnelle provenant de la cuve réactionnelle à une séparation solide-liquide,
dans laquelle le titanate de métal alcalin pulvérulent est ajouté aux eaux usées contenant du strontium radioactif dans la cuve réactionnelle, le strontium radioactif dans les eaux usées est adsorbé sur le titanate de métal alcalin pulvérulent, et le titanate de métal alcalin pulvérulent sur lequel le strontium radioactif est adsorbé est séparé avec le moyen de séparation solide-liquide.

7. Utilisation d'un appareil de traitement d'eaux usées contenant du strontium radioactif selon la revendication 6,
dans laquelle l'appareil comprend en outre un moyen pour ajouter un carbonate à la cuve réactionnelle et un moyen pour ajuster le pH dans la cuve réactionnelle.

8. Utilisation d'un appareil de traitement d'eaux usées contenant du strontium radioactif selon la revendication 6,
dans laquelle l'appareil comprend en outre une première cuve réactionnelle dans laquelle un carbonate et un alcalin sont ajoutés aux eaux usées, la première cuve réactionnelle étant située en amont de la cuve réactionnelle équipée d'un agitateur de façon à ce qu'un écoulement de sortie provenant de la première cuve réactionnelle soit introduit dans la cuve réactionnelle équipée d'un agitateur.

9. Utilisation d'un appareil de traitement d'eaux usées contenant du strontium radioactif selon l'une quelconque des revendications 6 à 8,
dans laquelle le moyen de séparation solide-liquide est une cuve de décantation ou un séparateur à membrane d'ultrafiltration.
